(19) Europäisches Patentamt
European Patent Office
Office européen des brevets

(11) EP 2 792 617 B1

(12) **EUROPEAN PATENT SPECIFICATION**

(45) Date of publication and mention
of the grant of the patent:
**07.12.2016 Bulletin 2016/49**

(51) Int Cl.:
**B65D 85/66** *(2006.01)* **B60P 7/12** *(2006.01)*

(21) Application number: **13164339.7**

(22) Date of filing: **18.04.2013**

(54) **Holder and arrangement for holding a coil during transport**

Halter und Anordnung zum Halten einer Spule während des Transports

Support et dispositif pour maintenir une bobine pendant le transport

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.10.2014 Bulletin 2014/43**

(73) Proprietor: **Wagenborg Shipping B.V.**
**9934 CK Delfzijl (NL)**

(72) Inventors:
• **Boosman, Jan Bart**
**9798 PD Garmerwolde (NL)**

• **Snijders, Albert Jan**
**47200 Elimäki (FI)**

(74) Representative: **V.O.**
**P.O. Box 87930**
**2508 DH Den Haag (NL)**

(56) References cited:
**WO-A1-2008/150162    WO-A2-2008/142202**
**DE-A1- 19 741 311    US-A- 2 936 992**
**US-A- 6 142 440**

**Description**

FIELD AND BACKGROUND OF THE INVENTION

The invention relates to a holder according to the introductory portion of claim 1.

Such a coil holder is disclosed in DE 197 41 311. U.S. patent 6 142 440 discloses a coil holder for supporting large rolls of web material. The holder is preferably made of dried pulp material. A roll of web material is generally supported by a roll supporting surface defined by support wedges contained on a face side surface of the roll support. Enlarged sidewall arches are formed in the sidewalls of the roll support. The roll support includes a reinforcement bridge formed on the back side surface between each sidewall arch and a protrusion on the back side of the large roll support which corresponds to one of the rectangular depressions on the face side of the large roll support. The reinforcement bridges increase the structural stability of the roll support under heavy loads, and prevent the sidewalls from deforming during the forming process.

German patent application 40 17 918 A1 discloses a coil holder having a frame which has a rectangular base consisting of longitudinal members which are connected by cross-members. The base has four corner posts which support end walls. These end walls can be swung inwards to lie flat on the base to allow stacking of the holders in a more compact configuration. For supporting the coils vertically and preventing rolling of the coils held by the holder, this coil holder has pairs of oppositely inclined supporting surfaces, each pair forming a cradle trough. The coils to be transported can be seated in the cradles so that the coils are, at least to an extent required for safe and damage free transport, immobilized against rolling.

The shipping of coils, also referred to as reels, such as coils of metal plate or wire, on board of transport facilities such as ships and land vehicles poses particular challenges in view of the high specific and overall mass (generally 15,000 - 60,000 kg) of such items, the generally cylindrical shape which allows coils to roll over a flat support, the vulnerability to damage and, in many cases, the limited structural integrity, which causes that the coils easily unwind if damaged. However, to a large extent similar problems occur in the transportation of other kinds of cylindrical items, such as heavy cylindrical tanks.

It is known to transport for instance coils of steel plate with the main central axes oriented horizontally at the bottom (tanktop) of a ship cargo space. The coils are placed in rows with circumferences of successive coils directly in contact with each other. The coils are immobilized by causing a last coil to be supported with its circumferential surface resting on the circumferential surfaces of two directly adjacent, previously loaded coils, the spacing between the latter two coils being too small to allow the last coil to fully fit in-between these two coils, so that the last coil urges the coils on the bottom towards the opposite ends of the cargo space, where the outer coils of the row rest laterally against side walls of the cargo space. In view of a wedging effect and the substantial weight of a coil of steel plate, the coils on the bottom may be forced outwardly with a substantial force. In addition, the coils are often tied with metal strips and or supported by wedges of wood or other relatively resilient material.

One of the problems associated with this conventional arrangement is that a ship loaded with coils becomes very stable, so that the rolling period of the ship becomes very short and the rolling movements of the ship become accordingly violent. This is due to the fact that the centre of gravity of a ship loaded with high specific mass cargo in the bottom portion of the cargo space only is relatively far below the metacentre (axis of roll) of the loaded ship.

According to JP 61 244 687A, this problem is solved by arranging coils on a tweendeck, i.e. higher up in the ship, so that the centre of gravity of the loaded ship will be higher up and, accordingly, located closer below the metacentre of the loaded ship, so that the duration of the rolling period is increased.

Holders of the initially identified type can be used to keep the coils in position on a tweendeck as well as on a tanktop or on other transport platforms, such as the top of a train wagon or truck. However, in spite of being stackable, such coil holders occupy a substantial amount of space when not in use, which is especially disadvantageous if the coil holders are to be transported back in combination with other cargo which may be of a low specific mass, such that available cargo space, and not allowable cargo mass, constitutes the limiting factor determining the maximum cargo capacity of the ship. Similar holder storage problems are encountered if such holders are used for supporting coils in other transport means such as train wagons and trucks.

SUMMARY OF THE INVENTION

It is an object of the present invention to provide a holder enabling safe transportation of coils and similar large, heavy weight generally cylindrical objects on a cargo platform of a ship or other means of transport, but which occupies little space when not in use.

This object is achieved by providing a holder according to claim 1. The invention can also be embodied in a set of such holders according to claim 13 or in an arrangement including such a set according to claim 14.

Because the support leg portions and the cradle portion are contiguous and constitute a single wall structure, holders according to the invention can be stacked in a nested configuration occupying very little space when not in use and disassembled from the cargo platform. Furthermore, a single wall structure of contiguous support leg and cradle portions is relatively flexible which allows the holder to accommodate to the shape of the coil and to unevenness of the platform top, for instance due to deformation under load or manufacturing tolerances, so that an evenly distributed load transfer to the support platform is achieved. This at least reduces the local peak loads exerted onto the platform and allows the coil holder to be of a light design, which is in turn favourable for increasing the net payload weight of the transport means and for handling of dismounted coil holders. The shape with all bends and fold having bending axes parallel to the trough moreover imparts flexibility to the coil holder in directions transverse to the trough. This is advantageous for accommodating to loads exerted by the coils and pre-tensioning lashings against biasing forces exerted by the resilient coil holders. Thus, slack in lashings due to for instance stretching of the lashing material or setting of the coil is counteracted.

The coil holder according to the present invention can be used on a wide variety of cargo platforms, such as a tanktop (bottom of a cargo space) or tweendeck of a ship and a flat top of a frame of a train wagon or a truck. The platform may for instance be a flat floor having a generally closed surface or a structure of beams with openings in between but defining a generally flat top plane. Being suitable for transporting coils, holders according to the invention can also be used for transporting other generally cylindrical, large and heavy cargo. Furthermore, the holders can also be used for supporting coils and the like in warehouses and other stationary storage facilities.

The structure formed by the cradle portion and the support leg portions contiguous therewith can be made of the same wall material all over the cradle portion and the support leg portions or of different materials. The wall material or materials may be single layered or, entirely or locally, multi layered materials. A permanent or temporary lining of one or more layers of resilient padding material, such as rubber or soft polymer material may be part of the single wall, but it is also possible to use a loose, temporary padding that may for instance be put in place together with the coils to be transported. The wall material or materials may furthermore be or include uniform materials or composite materials, such as fibres embedded in a plastic matrix material. The latter material allows fibre lay-up to be varied between different areas of the coil holder, to accommodate to differences in loads exerted onto these areas and differences in stiffness requirements.

The cradle portion and the support leg portions preferably constitute the single wall structure over its expanse in a direction parallel to the trough, from one end of the coil holder to the opposite end of the coil holder. This avoids the presence of parts that increase the height occupied by each coil holder when the coil holders are stacked and provides an efficient construction.

If the holder is equipped with a retention portion for retaining the holder against displacement along the bottom plane relative to the cargo platform, shifting of the holder over the bottom plane can be avoided in a simple manner and simple projections or recesses on the platform will suffice to keep the holder in place and in shape. It is however also possible, to provide projections on the platform between which the holder fits with little clearance or even tightly and that constitute obstacles preventing the holder from shifting over the platform.

A holder that can be stacked with a very thin layer pitch, can be manufactured particularly efficiently, is particularly rugged and easily repairable when damaged is obtained if the wall material is a metal plate material, such as steel plate material.

The wall material may for instance comprise at least two contiguous panels mutually connected along a fold or bend in the wall material. In this manner, the structure of mutually connected panels that are oriented differently can be manufactured in a simple manner by folding from a flat material or laying-up composite material in a suitably shaped mould and a strong and impact resistant integrally formed element is obtained. Furthermore, the need of welding or applying other connection techniques where adjacent panels meet is avoided. The fold or bend may be a relatively sharp fold, for instance close to the minimum bending radius if the material is metal plate, or a relatively wide bend.

If at least a portion of the plate material is a seamless single wall from at least a lower end of one of the support legs to the lower end of the opposite one of the support legs, that portion can be made without connecting wall parts to each other.

Also the panels may have some curvature, for instance to accommodate to the curvature of coils to be supported and/or to stiffen the panel. For instance ribs with a generally omega shaped cross-section may be provided in the cradle portion and/or the support legs in orientations perpendicular to the trough to counteract bending of the cradle portion panels or, respectively, buckling of the support legs. If the folds and/or bends are made by bending the wall material, it can be advantageous, for reducing the forces required for bending, to compose the holder of two or more sections that are first bent into the desired shape and then connected to each other (e.g. by welding) in succession in the direction of the trough.

Where a particularly sharp bend between the panels is desired or if adjacent panels are to be made from different plate materials, for instance of different thickness or with different preformed (e.g. corrugated) patterns, it can be more advantageous to provide that neighbouring panels are mutually connected along a weld or other connection such as a connection profile.

If the cradle portion includes a central bottom portion having at least one lower end in said bottom plane, the loads exerted on the opposite cradle surfaces inclined towards each other and facing obliquely upwardly can partially be transferred to the cargo platform between the support legs as well, so that the loads exerted onto the support leg portions are reduced. The central bottom portion can for instance be a flat panel or curved with a central hollow surface facing down so that the load transfer occurs along well defined, generally line-shaped areas at outer ends of the central bottom portion.

The fixation structure preferably has a lower end at a level higher than the bottom plane. This leaves room under the fixation structure for fixation members of the cargo platform. Also, this optional feature can ensure that the loads exerted on the support leg portions are primarily transferred to the cargo platform via the lower ends of the support leg portions and, where applicable, the central bottom portion and not primarily via the fixation structure.

To allow the coil holders to be stacked with a relatively small stacking pitch, the absolute value of an enclosed angle between the steepest wall material of the support leg portion and the cradle portion and the bottom plane is preferably smaller than 80°, more preferably smaller than 75° and more preferably 72° or less over the entire support leg portion. The stacking pitch (stacking height added by each holder in a stack) is essentially determined by the largest local thickness of the coil holder in a direction perpendicular to the bottom plane. This largest thickness is preferably determined by the material thickness of the wall material and the largest absolute value of an enclosed angle between the wall material and the bottom plane. When the wall material extends at an angle relative to the bottom plane, the thickness of the wall material in a direction perpendicular to the bottom plane is:

$$T \cdot \tan \alpha$$

where T is the material thickness and $\alpha$ is the absolute value of an enclosed angle between the wall material and the bottom plane. At larger angles, the value of tan $\alpha$ increases rapidly as is illustrated by the following table:

| $\alpha$ | $\tan \alpha$ |
| --- | --- |
| 72° | 3.07 |
| 75° | 3.7 |
| 80° | 5.6 |

Also, the wedging effect, that can cause stacked coil holders to be clamped onto each other, increases proportionally with tan $\alpha$.

To limit the effective stacking pitch, it is generally preferred that the coil holder has a largest thickness in a direction perpendicular to the bottom plane of less than six times the material thickness of the wall material of the support leg portion and the cradle portion.

One or more openings may be provided in the wall material of the support leg portion and the cradle portion. Such openings may serve as anchoring facilities for lashing coils to the coil holders and/or for engagement facilities for hoisting tools such as hoisting hooks.

The coil holder preferably has outer flanges projecting laterally from outer ends of the support leg portions. Such flanges increase the stability of the support leg portions in a horizontal plane and allow residual horizontal bearing forces to be transferred to local fixations of the coil holder to the cargo platform without causing too large deformations between the local fixations.

For a direct load transfer from the support leg portions to the cargo platform and obtaining stable lower ends of the support legs, it is furthermore advantageous if each support leg portion has a bearing wall portion of which a downwardly facing surface forms the lower end defining the bottom plane (along which the coil holder contacts the flat top of the platform when positioned thereon), and the bearing wall portion interconnects the laterally projecting outer flange and an inclined support wall portion of the support leg portion connected to the cradle portion and projects downwards to the bottom plane relative to the laterally projecting outer flange and relative to the inclined support wall portion of the support leg portion.

The downwardly facing surface of the bearing wall portion is preferably curved, such that it meets the bottom surface along a contact line. This establishes favourable bearing conditions and leaves a large free area for projections of the cargo platform between the surfaces of the coil holders via which the coil weight loads are transferred to the cargo platform. Additionally, the arrangement of generally line-shaped bearing protrusions avoids corrosion due to humidity staying trapped in narrow gaps between the coil holders and the top surface of the platform.

Preferably, the trough has at least one open end on at least one side, such that when aligned with a trough of another, identical coil holder with open trough ends facing each other, a substantially continuous trough is obtained and a row of coaxial coils can be arranged in successive coil holders, if necessary with one or more of the coils being supported partially by one coil holder and partially by a next coil holder. A small gap may be left between successive coil holders having the troughs in-line of each other, so that the coil holders can be positioned easily and reasonable tolerances on size and location of the coil holders can be allowed. That the objects to be transported can be supported by a succession of holders with troughs mutually aligned in longitudinal direction is also advantageous in that it allows supporting very long generally cylindrical objects such as sections of windmill towers and pipe sections. The relatively flexible support provided by the single wall structure of the holder according to the invention provides for an even distribution of loads of items simultaneously supported by successive holders, which load distribution is influenced to a relatively small extent only by misalignment between successive reel holders due to manufacturing tolerances, deformation of the support platform etc.

The coil holder is preferably of such a design that each support leg portion, an adjacent portion of the cradle portion and the bottom plane enclose a generally triangular space. Such a generally triangular structure formed by the support leg portion, the adjacent portion of the cradle portion and a portion of the cargo platform constitutes a particularly effective lightweight structure that transfers loads exerted by the coil to the cargo platform. For this purpose and for easy stacking and unstacking of the holders it is also advantageous that each support leg portion projects from a lateral outer end of the cradle portion.

The absolute value of an enclosed angle between the steepest wall material of the support leg portion and the cradle portion and the bottom plane is preferably larger than 64° and more preferably larger than 69° and most preferably 72° or more. Such a steep angle between wall material of the support leg portion and the bottom plane is advantageous for transferring load to the cargo platform in a direction relatively perpendicular to the cargo platform top, so that the forces exerted by the support leg portion contain a relatively small horizontal component that is operative along the top plane of the cargo platform and may to a large extent be transferred to the fixations with which the coil holder is fixed to the cargo platform.

In a set of holders in stacked condition, the holders are preferably stackable with a pitch of less than six times the material thickness of the wall material, so that the stacked holders occupy little space.

The cargo platform preferably has a pattern of retention recesses and/or projections and the coil holders are preferably each arranged and dimensioned for engaging a set of the retention recesses and/or projections of the cargo platform for retaining the holder against displacement along said bottom plane relative to the cargo platform. Thus, the holders can be coupled to the cargo platform quickly.

Further features, effects and details of the invention appear from the detailed description and the drawings.

BRIEF DESCRIPTION OF THE DRAWINGS

Fig. 1 is a cross sectional view of a ship with platforms carrying holders according to the invention and coils supported thereby;
Fig. 2 is a larger end view of one coil holder according to the invention arranged on a cargo platform and carrying coils as shown in Fig. 1;
Fig. 3 is a side view perpendicular to the end view shown in Fig. 2;
Fig. 4 is an end view according to Fig. 2 of the holder only;
Fig. 5 is a top plan view of a metal blank from which the holder as shown in Figs. 1-4 can be formed;
Fig. 6 is an end view of a stack of the **holders** as shown in Figs. 1-5;
Fig. 7 is an end view of halves of two other examples of a holder according to the invention arranged on a cargo platform; and
Fig. 8 is a top plan view of halves of metal blanks from which the holders as shown in Fig. 7 can be formed.

DETAILED DESCRIPTION

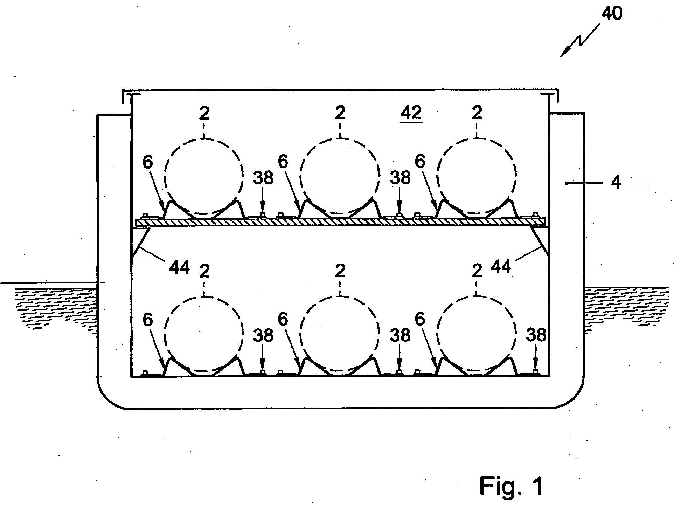

First, an example of a holder according to the invention shown in Figs. 1-6 is described. A possible application of such holders in a ship is illustrated by Fig. 1 which shows a ship 40 having a cargo space 42 in which a tweendeck 4 is supported by supports 44 engaged in recesses in side walls of the cargo space 44.

The tweendeck 4 constitutes a cargo platform carrying three parallel rows of coil holders 6 for transporting coils 2. In the present example, the coil holders are arranged such that the axes of the coils 2 carried thereby are arranged in longitudinal direction of the ship 40. It is however also possible, although not necessarily with the same tweendeck, to arrange the coil holders such that the axes of the coils carried thereby are oriented transversally to the longitudinal axis of the ship. The coil holders 6 are removably fixed to the tweendeck 4 by fixation members 38 that have been provided on the tweendeck in a pattern matching configurations of fixation facilities of the coil holders 6. Similar patterns of fixation members may also be provided on the tanktop (the bottom of the cargo space) and/or on a top deck.

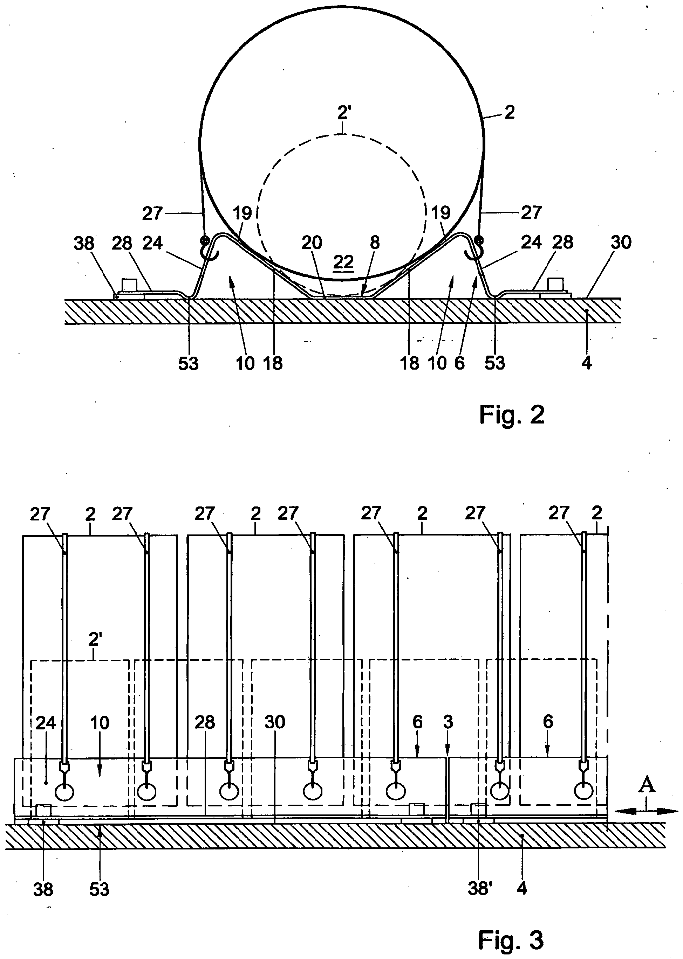

Figs. 2 and 3 show the coil holder 6 carrying coils 2 in more detail. As an alternative to the coils 2 shown in full lines, the coil holder 6 may also carry coils of another size, for instance smaller coils 2' shown in dotted lines.

The coil holder 6 is attached to the cargo platform 4 by retention members 38. The retention members also contribute to holding the relatively flexible coil holder 6 in shape by retaining the laterally outer ends of the coil against lateral deformation, i.e. residual horizontal loads are transferred from the coil holder 6 to the platform 4 at the retention members 38. Since residual horizontal loads are transferred from the coil holder to the platform, the coil holder can be of a relatively flexible, light weight design and still be capable of withstanding the high loads exerted by heavy items as coils of steel plate material. For instance coil holders preferably weigh less than 3000 kg and more preferably less than 2000 kg. In relation to the maximum mass of coils that can be carried by a holder, the mass of the coil holders can be less than 3% or, in more preferred embodiment, less than 2 to 2.5 %.

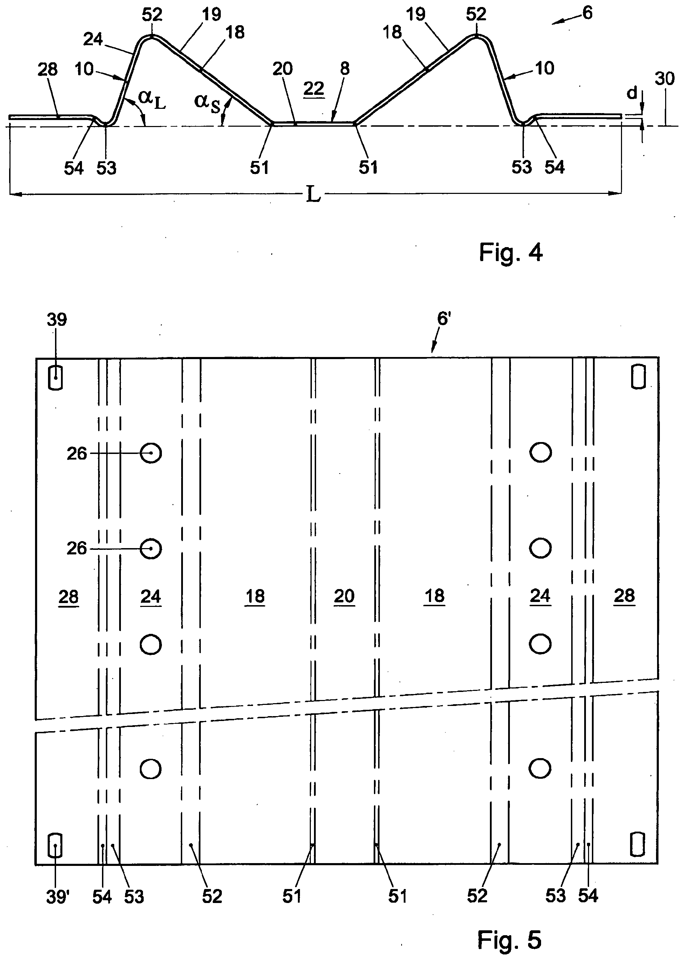

In the present example, the retention members are twist locks that simultaneously lock behind slots provided in the cargo platform 4 and slots 39 (see Fig. 5) provided in the coil holder 6. In another embodiment, the coil holder can be arranged for co-operation with twist locks provided in sockets for supporting ISO standardized shipping containers.

As can be seen in Fig. 3, which also shows a part of a next coil holder 6, the coil holders 6 are arranged with troughs 22 bounded by opposite inclined surfaces 19 in mutual alignment along a longitudinal axis (arrow A Fig. 3) thereof. Thus, a plurality of coil holders 6 bounds a continuous trough 22. Because of this continuous trough 22, the individual coils 2 can partially be supported by successive coil holders 6 as is shown for the third coil 2 from the left in Fig. 3. Thus, available space can be used very efficiently.

The coil holder 6 has a cradle portion 8 and support leg portions 10 contiguous with outer ends of the cradle portion 8. Bent areas 52 form transitions from the cradle portion 8 to the respective support leg portions 10. The cradle portion 8 is composed of coil support panels 18 of which the top surfaces form the opposite inclined surfaces 19 bounding the trough 22 and a base panel 20 connected between the coil support panels 18 along fold lines 51 and forming a bottom portion of the boundary of the trough 22. The cradle portion 8 thus establishes a receiving trough 22 for supporting the coils 2 and restraining the coils 2 against rolling about their axes of rotation.

Inner ends of the coil support panels 18 are supported by the platform 4 where the base panel 20 joins the coil support panels 18. Ends of the coil support panels 18 facing away from the base panel 20 are supported by the platform 4 via the support leg portions 10 connected thereto via the bent areas 52. The support leg portions 10 are each composed of a support panel 24 and a bearing wall portion formed by a bent area 53.

The cradle portion 8 and support leg portions 10 contiguous therewith form a single wall structure. The wall material is a primarily two dimensional material of which panels and bent portions are formed. The wall material preferably is thin walled to the extent that the thickness component is very small in comparison to both the length and width of the material.

For the transportation of coils of steel plate material, the wall material preferably has a thickness of 5 to 30mm and more preferably 10 to 25 mm. The length of the coil holder depends on the cargo to be transported and the space available, but will generally be preferred to be 2-15 m. The width of the coil holder will generally be preferred to be 2-3 m.

The bearing wall portions 53 form downward projections of which lowest lower end parts define a bottom plane 30 where the coil holder 6 contacts a flat surface when being positioned thereon. The bottom plane 30 is in line contact with the lower ends of the bearing wall portions 53. The base panel 20 also is in touch with the bottom plane 30. Along the bottom plane 30, the coil holder 6 supports against the plane top surface of the cargo platform 4 when the coil holder 6 is supported by a cargo platform 4. Vertical loads exerted by the coils 2 are transferred to the cargo platform along generally line-shaped surfaces where the base panel 20 joins the coil support panels 18 and via bottom surfaces of the bearing wall portions that define the bottom plane 30.

An outer flange 28 is connected to the bearing wall portion 53 of the support leg portion 10 is having slot shaped openings 39 for connection to the fixation members 38 for fixing the coil holder 6 relative to the cargo platform 4. Also the outer flange 28, the bearing wall portion 53 and the support leg sheet 24 are integrally made from the one metal sheet 20 by bending process as will be explained in the following.

In this embodiment, the outer flanges 28 are based on the surface of the cargo deck 4 when the coil holder 6 is attached to the cargo deck 4 so that the bearing wall portion 53 acts as line protrusion in the longitudinal direction A.

With the arrangement shown in Figs. 2 and 3 favourable loading capacities combined with secure cargo support and fixation can be obtained.

Furthermore, the coil holders 6 each have a cross-section that is constant over the entire length in longitudinal direction of the trough 22 bounded thereby. This allows the coil holders 6 to be manufactured in a particularly efficient manner by folding and bending along fold lines 51, 54 and bending zones 53, 53 from a blank 6' as shown in Fig. 5. The shape with all bends and fold having bending axes parallel to the longitudinal direction A moreover imparts flexibility to the coil holder 6 in directions transverse to the longitudinal direction A. This is advantageous for accommodating to loads exerted by the coils and pre-tensioning lashings against biasing forces exerted by the resilient coil holders. Thus, slack in lashings due to for instance stretching of the lashing material or setting of the coil is counteracted.

In Fig. 5, a steel blank 6' for manufacturing the coil holder 6 by bending is shown. The panels 18, 20, 24, 28 of the coil holder 6 are obtained by bending and the blank along fold lines 51, 54 and in bending zones 52, 53 to obtain the desired angles between the panels. The openings 26 for attaching lashings 27 (see Figs. 2 and 3) are preferably provided prior to bending.

The blank 6', and accordingly after bending the coil holder 6 as well, has fixation openings 39 used for receiving the fixation members 38 as shown in Figs. 1-3. In the present example, the fixation members are provided in the form of ISO twist lock members having upper and lower wings that can be arranged with the lower wings aligned with and inserted via slots in the cargo platform 4. After the coil holder 6 is positioned over upper wings of the twist lock members 38, the twist lock members 38 can be rotated by engaging the upper twist lock members so that the wings are turned to positions transverse to the slots in the cargo platform 4 and the coil holder 6. The coil holders may be provided with cam surfaces to achieve a clamping and/or locking effect when the twist lock members 38 are rotated towards the fixation positions. However, many other solutions for fixing the coil holders to the cargo platform are conceivable. The coil holders may for instance be positioned with recesses over projections in the cargo platform or vice versa, the vertical fixation being achieved by clamping the coil holder between the coils and the cargo platform as lashings attached to the platform and arranged over the coils pull the coils towards the cargo platform. Another option is to arrange the outer flanges and the openings therein in a configuration matching sockets for supporting ISO-standardized shipping containers.

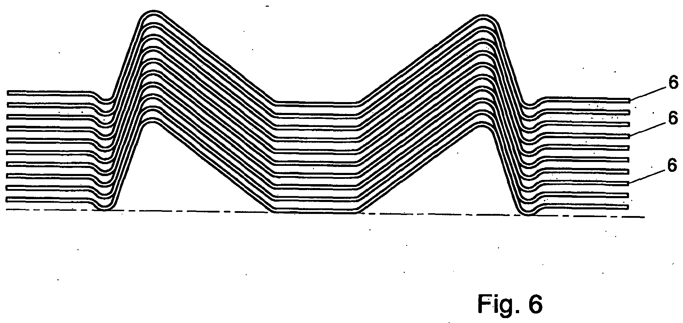

As shown in Fig. 6, a plurality of the coil holders 6 can be easily stored in a stacked configuration occupying very little space since the coil holders 6 are nestable. The lower one of the coil holders 6 may be attached to the cargo platform 4, while the coil holders 6 that are detached from the cargo platform 4 may also be attached to each other via the openings 39 to ensure integrity of the stack when the cargo platform 4 is subjected to accelerations and decelerations and tilting during transport. Since the coil holders are flexible and to some extent maintained in shape by the fixation to the deck, the coil holders 6 are light weight and easy to rearrange between stacked condition and a condition attached to the cargo platform 4 for use. The compact stackability and relatively small weight of the coil holders 6 is also advantageous when the coil holders are left ashore or for transport for use in another location.

In Fig. 4 the angle of inclination $\alpha_S$ of the coil support surface 19 and the angle of inclination $\alpha_L$ of the support leg panel 24, both relative to the bottom plane 30, are indicated. In the present example, the angle of inclination $\alpha_S$ of the coil support surface 19 is 38°. The angle of inclination $\alpha_S$ of the coil support surface 19 is preferably 25 - 45°. If the coil holders are to be arranged with the troughs in longitudinal direction of the ship, the angle of inclination $\alpha_S$ of the coil support surface 19 is preferably at least equal to the maximum heel angle of the ship, so that even at the maximum heel angle, no coil support surfaces will slope downward towards the outside of the coil holder. However, the angle of inclination $\alpha_S$ of the coil support surface 19 is preferably not steeper than required for reliably holding the coils, because the pressure exerted by a coil on the opposite coil surfaces increases with the steepness of the coil support surfaces.

In the present example, the angle of inclination $\alpha_L$ of the support leg panel 24 is 72°. This is slightly more upright than perpendicular to the coil support panel 18, which is favourable for limiting the horizontal component in the force transferred via the support leg panel 24. However, a much more upright inclination of the support leg panel 24 would result in a substantially increased layer thickness in a stacked set of coil holders. If the coil holder is arranged for connection to container support sockets of standard ISO shipping containers that are arranged in a pattern for supporting 6.1m (20 ft) **containers,** the length of the coil holder is preferably about 6 m and the width about 2.5 m. The latter width also provides the advantage that road transport in a horizontal orientation is possible, so the coil holder can also be used on road transport vehicles.

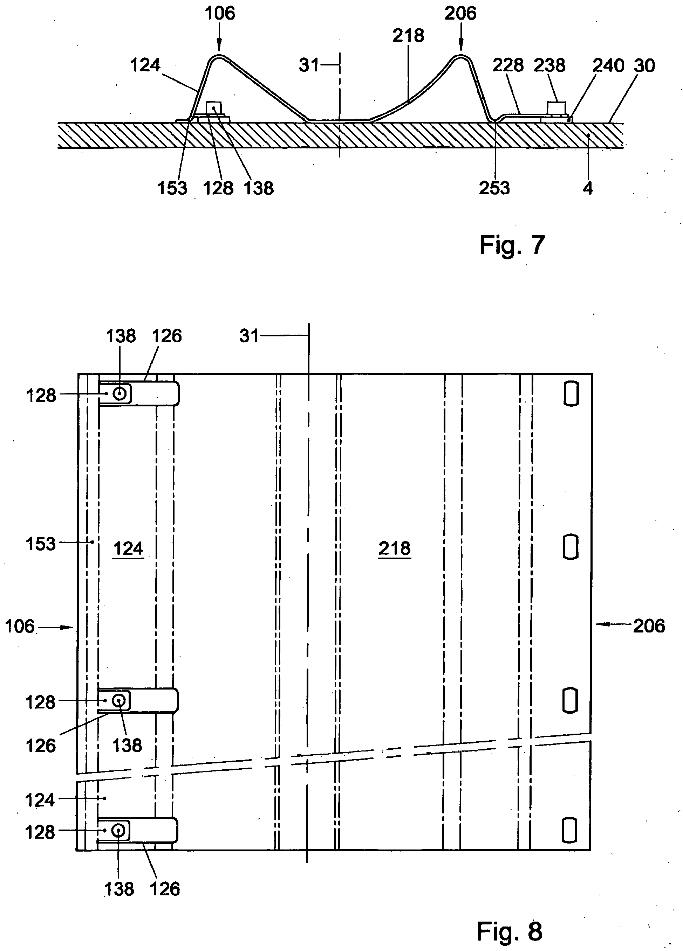

In Figs. 7 and 8 halves of two alternative examples of coil holders 106, 206 are shown on opposite sides of a vertical plane 31.

Particular features of the reel holder 106 at the left of plane 31 which differ from the coil holder 6 shown in Figs 1-6 are that the bearing wall portion 153 also constitutes the outer flange of the coil holder 106. Furthermore, the openings 126 in the support leg panel 124 extend to the fold between the wall portion 153 and the support leg panel 124. Furthermore, lips 128 projecting inwardly from the bearing wall portion 153 have been left in the openings 126 such that upon bending of the bearing wall portion 153 to an angle relative to the support leg panel 124, the lips 128 pivot inwardly to a position projecting closely above the bottom plane 30. Furthermore, the lips have been provided with openings for receiving fixation members 138 for fixation of the lips 128 to the platform 4. By leaving the lips 128 in the openings 126, lips 128 for fixation of the coil holder 106 to the platform 4 are formed as openings for engaging lashings are made. Furthermore, the fixation members 138 can be reached via the openings while being located inside the profile of the coil holder 106 and accordingly protected against damage and not constituting a hazard that can easily cause tripping, straining of ankles etc.

The coil holder 206 of which a half is shown to the right of plane 31 has a coil support panel 218 that is slightly curved, so that it can resist loads exerted thereon by a coil with less deformation while supporting the coil over a zone with a larger width. The bearing wall support leg portions 253 are shaped such that the outer flanges 228 projecting therefrom extend to a level above the bottom plane 30 at the outer end where slots for receiving fixation members 238 are located, that sockets 240 carrying twist locks for engaging corner castings of ISO standard shipping containers fit underneath outer flanges 228 and the twist locks 238 thereof can project through the openings in the outer flanges 228 for fixing the coil holder 206 to the container sockets 240.

**Claims**

1. A holder for holding at least one heavy weight coil (2), such as a coil of metal or wire of 15.000 - 60.000 kg, in a position relative to a substantially planar top of a cargo platform (4) of a ship or other means of transport supporting the holder, comprising:

   a cradle portion (8) with opposite cradle surfaces (19) inclined towards each other and facing obliquely upwardly, defining a trough (22) for contacting a circumferential surface of a substantially cylindrical coil (2) oriented with a centre line parallel to the trough (22), in at least two coil contact positions, the first coil contact position on a first one of the cradle surfaces (19) and the second, opposite coil contact position on a second, opposite one of the cradle surfaces (19) and spaced from the first coil contact position; **characterized in that** the holder comprises

at least two support leg portions (10) spaced apart in a direction perpendicular to the trough (22), the support leg portions (10) having lower ends (53; 153) for contacting the cargo platform top, the lower ends (53; 153) defining a bottom plane (30);

wherein at least the support leg portions (10) and the cradle portion (8) are contiguous and constitute a single wall structure;

wherein said single wall structure comprises at least two contiguous panels (18, 20, 24, 28; 124, 128; 228) mutually connected along a fold (51, 54) or bend (52, 53; 153; 253) in said single wall structure; and

wherein each bend (52, 53; 153; 253) or fold (51, 54) connecting said contiguous panels (18, 20, 24, 28; 124, 128; 228) in said single wall structure has a bending or folding axis parallel to the trough (22) and **in that** the holder has a width of at least 2 m.

2. A holder according to claim 1, wherein the cradle portion (8) and the support leg portions (10) constitute the single wall structure over the expanse of the holder (6; 106; 206) in a direction parallel to the trough (22), from one end of the holder (6; 106; 206) to the opposite end of the holder (6; 106; 206).

3. A holder according to one of the preceding claims, wherein at least a portion of the single wall structure is a seamless single wall of plate material from at least a lower end of one of the support legs to the lower end of the opposite one of the support legs.

4. A holder according to one of the preceding claims, wherein the cradle portion (8) comprises a central bottom portion (20) having at least one lower part meeting the bottom plane (30).

5. A holder according to one of the preceding claims, wherein an absolute value of an enclosed angle ($\alpha_L$) between the steepest wall material portion of the support leg portion (10) and the cradle portion (8) and the bottom plane (30) is smaller than 80°.

6. A holder according to one of the preceding claims, wherein a largest thickness of the holder measured in a direction perpendicular to the bottom plane (30), defined as T x tan $\alpha$, where T is the material thickness and $\alpha$ is the absolute value of an enclosed angle between the wall material and the bottom plane, is smaller than six times the material thickness of the wall material of the support leg portion (10) and the cradle portion (8).

7. A holder according to one of the preceding claims, further comprising an outer flange (28; 228) projecting laterally from an outer end of at least one of the support leg portions (10).

8. A holder according to claim 7, wherein, each support leg portion (10) has a bearing wall portion (53; 153; 253) of which a downwardly facing surface forms the lower end defining the bottom plane (30) and for contacting the top of the platform (4), and wherein the bearing wall portion (53; 153; 253) interconnects the laterally projecting outer flange (28; 228) and an inclined support wall panel (24; 124) of the support leg portion (10) connected to the cradle portion (8) and projects downwards to the bottom plane (30) relative to both the laterally projecting outer flange (28; 228) and the inclined support wall panel (24; 124) of the support leg portion (10).

9. A holder according to claim 8, wherein the downwardly facing surface of the bearing wall portion (53) is curved such that it meets the bottom surface (30) along a contact line.

10. A holder according to one of the preceding claims, wherein the trough (22) has at least one open end on at least one side, such that when aligned with a trough of another, identical holder (6; 106; 206) with open trough ends facing each other, a substantially continuous trough (22) is obtained.

11. A holder according to one of the preceding claims, wherein, in end view, each support leg portion (10), an adjacent portion (18; 218) of the cradle portion 8 and the bottom plane (30) enclose a generally triangular area.

12. A holder according to one of the preceding claims, wherein each support leg portion (10) projects from a lateral outer end of the cradle portion (8).

13. A set of holders according to one of the preceding claims, wherein, in stacked configuration, the height added by each holder in the stack is less than six times the material thickness of the single wall structure.

14. An arrangement comprising a set of holders (6; 106; 206) according to claim 13 and a cargo support platform (4), the cargo support platform (4) having a pattern of retention recesses and/or projections (38; 138; 238), wherein the holders (6; 106; 206) are each arranged and dimensioned for engaging a set of the retention recesses and/or projections (38; 138; 238) of the cargo platform (4) for retaining the holder (6; 106; 206) against displacement along said bottom plane (30) relative to the cargo platform (4).

**Patentansprüche**

1. Halter zum Halten von mindestens einer schwergewichtigen Spule (2), wie etwa einer Spule für Metall oder Draht von 15.000 - 60.000 kg, in einer Position zu einer im Wesentlichen ebenen Oberseite einer Frachtgutplattform (4) eines Schiffes oder anderen Transportmittels, das den Halter stützt, umfassend:

   einen Trägerabschnitt (8) mit gegenüberliegenden Trägerflächen (19), die zueinander geneigt und schräg nach oben gerichtet sind, definierend eine Wanne (22) zum Kontakt mit einer Umfangsoberfläche einer im Wesentlichen zylindrischen Spule (2), ausgerichtet mit einer Mittellinie parallel zu der Wanne (22) in mindestens zwei Spulenkontaktpositionen, die erste Spulenkontaktposition an einer ersten der Muldenoberflächen (19) und die zweite gegenüberliegende Spulenkontaktposition an einer zweiten gegenüberliegenden der Muldenoberflächen (19) und in einem Abstand von der ersten Spulenkontaktposition;
   **dadurch gekennzeichnet, dass** der Halter mindestens zwei Stützbeinabschnitte (10) umfasst, in einer Richtung senkrecht zu der Wanne (22), welche Stützabschnitte (10) untere Enden (53; 153) zum Kontakt mit der Oberseite der Frachtgutplattform haben, welche unteren Enden (53; 153) eine Bodenebene (30) definieren; wobei mindestens die Stützbeinabschnitte (10) und der Trägerabschnitt (8) zusammenhängend sind und eine einzelne Wandstruktur bilden; wobei die einzelne Wandstruktur mindestens zwei zusammenhängende Platten (18, 20, 24, 28; 124, 128; 228) umfasst, die entlang einer Falte (51, 54) oder Krümmung (52, 58; 153; 253) in der einzelnen Wandstruktur miteinander verbunden sind; und wobei jede Krümmung (52, 53; 153; 253) oder Falte (51, 54), die die zusammenhängenden Platten (18, 20, 24, 28; 124, 128; 228) in der einzelnen Wandstruktur verbindet, eine Krümmungs- oder Faltachse parallel zu der Wanne (22) hat und der Halter eine Breite von mindestens 2 m hat.

2. Halter nach Anspruch 1, wobei der Trägerabschnitt (8) und die Stützbeinabschnitte (10) eine einzelne Wandstruktur über die Fläche des Halters (6; 106; 206) in einer Richtung parallel zu der Wanne (22) von einem Ende des Halters (6; 106; 206) zum gegenüberliegenden Ende des Halters (6; 106; 206) bilden.

3. Halter nach einem der vorhergehenden Abschnitte, wobei mindestens ein Abschnitt der einzelnen Wandstruktur eine nahtlose Einzelwand aus Blechmaterial von mindestens einem unteren Ende von einem der Stützbeine zum unteren Ende des gegenüberliegenden der Stützbeine ist.

4. Halter nach einem der vorhergehenden Ansprüche, wobei der Trägerabschnitt (8) einen mittleren Bodenabschnitt (20) mit mindestens einem unteren Teil, das auf die Bodenebene (30) trifft, umfasst.

5. Halter nach einem der vorhergehenden Ansprüche, wobei ein absoluter Wert eines eingeschlossenen Winkels ($\alpha_L$) zwischen dem steilsten Wandmaterialabschnitt des Stützbeinabschnitts (10) und des Trägerabschnitts (8) und der Bodenebene (30) kleiner als 80° ist.

6. Halter nach einem der vorhergehenden Ansprüche, wobei eine größte Dicke des Halters, gemessen in einer Richtung senkrecht zu der Bodenebene (30), definiert als T x tan $\alpha$, wobei T die Materialdicke und $\alpha$ der absolute Wert eines eingeschlossenen Winkels zwischen dem Wandmaterial und der Bodenebene ist, kleiner als das Sechsfache der Materialdicke des Wandmaterials des Stützbeinabschnitts (10) und des Trägerabschnitts (8) ist.

7. Halter nach einem der vorhergehenden Ansprüche, ferner umfassend einen äußeren Flansch (28; 228), der seitlich von einem äußeren Ende von mindestens einem der Stützbeinabschnitte (10) hervorsteht.

8. Halter nach Anspruch 7, wobei jeder Stützbeinabschnitt (10) einen tragenden Wandabschnitt (53; 153; 253) hat, von dem eine abwärts gerichtete Fläche das untere Ende, definierend die Bodenebene (30), bildet und zum Kontakt mit der Oberseite der Plattform (4), und wobei der tragende Wandabschnitt (53; 153; 253) den seitlich hervorstehenden äußeren Flansch (28; 228) und eine geneigte Stützwandplatte (24; 124) des Stützbeinabschnitts (10), verbunden mit dem Trägerabschnitt (8), miteinander verbindet und abwärts zu der Bodenebene (30) in Bezug auf sowohl den seitlich hervorstehenden äußeren Flansch (28; 228) und die geneigte Stützwandplatte (24; 124) des Stützbeinabschnitts (10) ragt.

9. Halter nach Anspruch 8, wobei die abwärts gerichtete Fläche des tragenden Wandabschnitts (53) so gekrümmt ist, dass sie entlang einer Kontaktlinie auf die Bodenebene (30) trifft.

10. Halter nach einem der vorhergehenden Ansprüche, wobei die Wanne (22) mindestens ein offenes Ende an mindestens einer Seite hat, sodass, wenn sie zu einer Wanne eines anderen identischen Halters (6; 106; 206) mit offenen, zueinander gerichteten Wannenenden ausgerichtet ist, eine im Wesentlichen durchgehende Wanne (22) entsteht.

**11.** Halter nach einem der vorhergehenden Ansprüche, wobei in Rückansicht jeder Stützbeinabschnitt (10), ein angrenzender Abschnitt (18; 218) des Trägerabschnitts (8) und die Bodenebene (30) einen allgemein dreieckigen Bereich einschließen.

**12.** Halter nach einem der vorhergehenden Abschnitte, wobei jeder Stützbeinabschnitt (10) von einem seitlichen äußeren Ende des Trägerabschnitts (8) hervorsteht.

**13.** Satz von Haltern nach einem der vorhergehenden Ansprüche, wobei, in gestapelter Konfiguration, die Höhe, hinzugefügt durch jeden Halter in dem Stapel, weniger als das Sechsfache der Materialdicke der einzelnen Wandstruktur ist.

**14.** Anordnung, umfassend einen Satz von Haltern (6; 106; 206) nach Anspruch 13 und eine Frachtgut-Trageplattform (4), welche Frachtgut-Trageplattform (4) ein Muster von Rückhaltevertiefungen und/oder Vorsprüngen (38; 138; 238) hat, wobei die Halter (6; 106; 206) jeweils angeordnet und dimensioniert sind, um in einen Satz von Rückhaltevertiefungen und/oder Vorsprüngen (38; 138; 238) der Frachtgutplattform (4) einzugreifen, um den Halter (6; 106; 206) gegen ein Verschieben entlang der Bodenebene (30) in Bezug auf die Frachtgutplattform (4) zurückzuhalten.

**Revendications**

**1.** Support pour tenir au moins une bobine lourde (2), comme une bobine de métal ou de fil métallique de 15 000 à 60 000 kg, dans une position par rapport à un dessus substantiellement plat d'une plateforme de charge (4) d'un navire ou autre moyen de transport qui supporte le support, comprenant :

une partie de berceau (8) ayant des surfaces de berceau opposées (19) inclinées l'une vers l'autre et tournées en oblique vers le haut, définissant un creux (22) destiné à entrer en contact avec une surface circonférentielle d'une bobine substantiellement cylindrique (2) orientée avec un axe central parallèle au creux (22), dans au moins deux positions de contact de bobine, la première position de contact de bobine sur une première des surfaces de berceau (19) et la deuxième position de contact de bobine, opposée, sur une deuxième surface de berceau, opposée (19) et distante de la première position de contact de bobine ;
**caractérisé en ce que** le support comprend :

au moins deux parties de jambes de support (10) espacées l'une de l'autre dans une direction perpendiculaire au creux (22), les parties de jambes de support (10) ayant des extrémités inférieures (53 ; 153) pour entrer en contact avec le dessus de la plateforme de charge, les extrémités inférieures (53 ; 153) définissant un plan de fond (30) ;
dans lequel au moins les parties de jambes de support (10) et la partie de berceau (8) sont contiguës et constituent une structure de paroi simple ;
dans lequel ladite structure de paroi simple comprend au moins deux panneaux contigus (18, 20, 24, 28 ; 124, 128 ; 228) mutuellement connectés le long d'un pli (51, 54) ou courbe (52, 53 ; 153 ; 253) formé(e) dans ladite structure de paroi simple ; et
dans lequel chaque courbe (52, 53 ; 153 ; 253) ou pli (51, 54) reliant lesdits panneaux contigus (18, 20, 24, 28 ; 124, 128 ; 228) dans ladite structure de paroi simple a un axe de courbure ou de pliage parallèle au creux (22) et **en ce que** le support a une largeur d'au moins 2 m.

**2.** Support selon la revendication 1, dans lequel la partie de berceau (8) et les parties de jambes de support (10) constituent la structure de paroi simple sur l'étendue du support (6 ; 106 ; 206) dans une direction parallèle au creux (22), d'une extrémité du support (6 ; 106 ; 206) à l'extrémité opposée du support (6 ; 106 ; 206).

**3.** Support selon l'une des revendications précédentes, dans lequel au moins une partie de la structure de paroi simple est une paroi simple en matériau plat sans soudure, au moins depuis une extrémité inférieure de l'une des jambes du support jusqu'à l'extrémité inférieure de la jambe de support opposée.

**4.** Support selon l'une des revendications précédentes, dans lequel la partie de berceau (8) comprend une partie de fond centrale (20) ayant au moins une partie inférieure qui rencontre le plan de fond (30).

**5.** Support selon l'une des revendications précédentes, dans lequel une valeur absolue d'un angle fermé ($\alpha_L$) entre la partie de matériau de paroi la plus pentue de la partie de jambe de support (10) et la partie de berceau (8) et le plan de fond (30) est inférieure à 80°.

**6.** Support selon l'une des revendications précédentes, dans lequel une épaisseur la plus grande du support mesurée dans une direction perpendiculaire au plan de fond (30), définie par T x tan $\alpha$, où T est l'épaisseur du matériau et $\alpha$ est la valeur absolue d'un angle fermé entre le matériau de la paroi et le plan de fond, est inférieure à six fois l'épaisseur de matériau du matériau de paroi de la partie de jambe de support (10) et de la partie de berceau (8).

7. Support selon l'une des revendications précédentes, comprenant en outre une bride extérieure (28 ; 228) faisant saillie latéralement depuis une extrémité extérieure d'au moins l'une des parties de jambes de support (10).

8. Support selon la revendication 7, dans lequel chaque partie de jambe de support (10) a une partie de paroi portante (53 ; 153 ; 253) dont une surface orientée vers le bas forme l'extrémité inférieure définissant le plan de fond (30) et pour entrer en contact avec le dessus de la plateforme (4), et dans lequel la partie de paroi portante (53 ; 153 ; 253) interconnecte la bride extérieure faisant saillie latéralement (28 ; 228) et un panneau de paroi de support incliné (24 ; 124) de la partie de jambe de support (10) connectée à la partie de berceau (8) et fait saillie vers le bas jusqu'au plan de fond (30) à la fois par rapport à la bride extérieure faisant saillie latéralement (28 ; 228) et au panneau de paroi de support incliné (24 ; 124) de la partie de jambe de support (10).

9. Support selon la revendication 8, dans lequel la surface orientée vers le bas de la partie de paroi portante (53) est courbée de telle manière qu'elle rencontre la surface de fond (30) le long d'une ligne de contact.

10. Support selon l'une des revendications précédentes, dans lequel le creux (22) a au moins une extrémité ouverte sur au moins un côté, de sorte que lorsqu'il est aligné avec un creux d'un autre support identique (6 ; 106 ; 206) avec les extrémités ouvertes des creux tournées l'une vers l'autre, on obtient un creux (22) substantiellement continu.

11. Support selon l'une des revendications précédentes, dans lequel, en vue latérale, chaque partie de jambe de support (10), une partie adjacente (18 ; 218) de la partie de berceau (8) et le plan de fond (30) englobent une zone généralement triangulaire.

12. Support selon l'une des revendications précédentes, dans lequel chaque partie de jambe de support (10) fait saillie depuis une extrémité extérieure latérale de la partie de berceau (8).

13. Ensemble de supports selon l'une des revendications précédentes, dans lequel, en configuration empilée, la hauteur ajoutée par chaque support dans la pile est inférieure à six fois l'épaisseur de matériau de la structure de paroi simple.

14. Agencement comprenant un ensemble de supports (6 ; 106 ; 206) selon la revendication 13 et une plateforme de support de charge (4), la plateforme de support de charge (4) ayant un motif d'évidements et/ou saillies de retenue (38 ; 138 ; 238), dans lequel les supports (6 ; 106 ; 206) sont agencés et dimensionnés chacun pour se mettre en prise avec un ensemble des évidements et/ou saillies de retenue (38 ; 138 ; 238) de la plateforme de charge (4) pour retenir le support (6 ; 106 ; 206) contre le déplacement le long dudit plan de fond (30) par rapport à la plateforme de charge (4).

Fig. 1

Fig. 2

Fig. 3

Fig. 4

Fig. 5

Fig. 6

Fig. 7

Fig. 8

**EP 2 792 617 B1**

## REFERENCES CITED IN THE DESCRIPTION

### Patent documents cited in the description

- DE 19741311
- US 6142440 A
- DE 4017918 A1
- JP 61244687 A